# EUROPÄISCHE PATENTSCHRIFT

(11) **EP 2 368 308 B1**
(45) Veröffentlichungstag und Bekanntmachung des Hinweises auf die Patenterteilung: **14.11.2018**
(21) Anmeldenummer: 09771521.3
(22) Anmeldetag: 24.11.2009
(51) Int. Cl.: H02K 1/32, H02K 9/10, H02K 9/18

(54) **ELEKTRISCHE MASCHINE MIT AXIALEN, RADIAL VERSETZTEM KÜHLSTROM UND ENTSPRECHENDE METHODE**
ELECTRICAL MOTOR HAVINGAXIAL AND RADIALLY OFFSETTED COOLING STREAM AND RELATED METHOD
MACHINE ÉLECTRIQUE À COURANT DE REFROIDISSEMENT AXIAL ET DÉPLACÉ RADIALEMENT, ET PROCÉDÉ CORRESPONDANT

(30) Priorität: 23.12.2008 DE 102008064498
(43) Veröffentlichungstag der Anmeldung: 28.09.2011
(73) Patentinhaber: Siemens Aktiengesellschaft, 80333 München (DE)
(72) Erfinder: ELENDER, Gunther, 94081 Fürstenzell (DE); MEMMINGER, Oliver, 94127 Neuburg A.D. Inn (DE); SCHÖNBAUER, Norbert, 94072 Bad Füssing (DE); SENNINGER, Karl, 84385 Egglham (DE)
(86) Internationale Anmeldenummer: PCT/EP2009/065717
(87) Internationale Veröffentlichungsnummer: WO 2010/072496

(56) Entgegenhaltungen:
- WO-A1-97/39513
- WO-A1-2005/013459
- DE-A1- 2 834 988
- DE-A1- 10 052 427
- DE-C1- 10 107 298
- JP-A- 58 215 954
- US-A- 3 684 906

## Beschreibung

Die vorliegende Erfindung betrifft eine elektrische Maschine mit einem Rotor, der einen einzigen radialen Kühlschlitz und axial verlaufende Kühlkanäle, die in seinen radialen Kühlschlitz münden, besitzt. Darüber hinaus betrifft die vorliegende Erfindung ein Verfahren zum Kühlen einer elektrischen Maschine mit einem Rotor durch Kühlen des Rotors mit einem Kühlstrom, der axial in den Rotor eingeleitet wird.

Grundsätzlich besteht der Bedarf, den Rotor einer elektrischen Maschine mit gleichmäßig kühler Luft (bzw. Kühlmittel) zu belüften. Gleichzeitig sollte ohne höheren Arbeitsaufwand ein Verguss der Magnettaschen zum Schutz der Magneten vor Korrosion und Bewegung möglich sein.

Bislang wurde ein Typ von permanentmagneterregten Synchronmaschinen mit nur einem Teilpaket gebaut. Dies hat den Nachteil, dass der Stator im mittleren Bereich nicht ausreichend mit Kühlluft versorgt werden kann. Auch wird der Rotor bei einflutigem Kühlmittelstrom nur ungleichmäßig gekühlt. Bei einem weiteren Typ von permanentmagneterregten Synchronmaschinen wurden die Magnete auf einzelne Teilpakete befestigt (z.B. durch Kleben). Dabei wurde zwar eine gleichmäßigere Kühlung erreicht, aber es ist sehr aufwendig, die Magneten durch einen Verguss am Verschieben oder vor Korrosion zu schützen.

Aus der Druckschrift DE 101 07 298 C1 ist eine elektrische Maschine mit einem Rotor, der einen radialen Kühlschlitz besitzt, bekannt. Der Rotor weist außerdem axial verlaufende Kühlkanäle auf, die in den radialen Kühlschlitz münden. Erste Kühlkanäle der axial verlaufenden Kühlkanäle verlaufen mit ihrer Zentralachse in einer anderen radialen Höhe gegenüber der Achse des Rotors als zweite Kühlkanäle der axial verlaufenden Kühlkanäle. Ein Kurzschlussring ist mit einer geschlossenen, ringförmigen Kammer zur Umkehr der Strömungsrichtung ausgestattet.

Ähnliche elektrische Maschinen mit radialem Kühlschlitz und axialen Kühlkanälen, die in unterschiedlichen radialen Ebenen verlaufen, sind aus den Druckschriften WO 97/39513 A1, US 3 684 906 A und DE 28 34 988 A1 bekannt. Dort sind auch Abstandshalter beschrieben, mit denen ein erster Kühlstrom von einem Kühlkanal in einen radial höheren oder tieferen Kühlkanal geleitet wird.

Die Aufgabe der vorliegenden Erfindung besteht darin, die Entwärmung eines Rotors einer elektrischen Maschine trotz einfacher Montage gleichmäßiger gestalten zu können. Darüber hinaus soll ein entsprechendes Kühlverfahren für einen Rotor einer elektrischen Maschine angegeben werden.

Erfindungsgemäß wird diese Aufgabe gelöst durch eine elektrische Maschine **nach Anspruch 1.**

Darüber hinaus ist erfindungsgemäß vorgesehen ein Verfahren **nach Anspruch 6.**

In vorteilhafter Weise wird der Kühlstrom erfindungsgemäß im Rotor von einer radialen Höhe in eine andere radiale Höhe gebracht. In einem radialen Schnitt betrachtet, könnte man auch von einem Wechsel der Kühlmittelebenen im Rotor sprechen. Dies erweist sich insbesondere dann als vorteilhaft, wenn der Rotor in unterschiedlichen radialen Höhen verschieden erwärmt wird. Es kann so innerhalb des Rotors ein Kühlstrom, der noch wenig Wärme aufgenommen hat, gezielt an eine radiale Position umgelenkt werden, die sehr effektiv entwärmt werden muss.

Vorzugsweise besitzt der Abstandshalter mehrere Scheiben, die jeweils Durchgangsöffnungen aufweisen, wobei die Durchgangsöffnungen der Scheiben so angeordnet sind, dass sie den ersten Kühlstrom in radialer Richtung umlenken. Die Scheiben des Abstandshalters erhalten somit eine zusätzliche Funktion neben der des Bereitstellens eines radialen Kühlschlitzes: Sie lenken einen Kühlstrom radial um.

In dem Rotor **ist** nur ein einziger radialer Kühlschlitz angeordnet. Dies hat den Vorteil, dass das Einbringen von Magneten in Magnettaschen der beiden Teilpakete verhältnismäßig leicht durchgeführt werden kann. Darüber hinaus ist das Vergießen der Magnettaschen mit isolierender Vergussmasse bei zwei Teilpaketen relativ unkompliziert durchzuführen.

**Ein** zweiter Kühlstrom **wird** in einen der axial verlaufenden Kühlkanäle eingeleitet und durch den Abstandshalter radial nach außen **gelenkt.** An der Stelle, an der der zweite Kühlstrom nach außen gelenkt wird, kann nun der erste Kühlstrom, sofern er an die radiale Position des zweiten Kühlstroms umgelenkt wird, dessen Kühlaufgaben in einem zweiten Teilpaket, d.h. in einem anderen axialen Bereich des Rotors übernehmen.

**Die** ersten Kühlkanäle **sind** in einer geringeren radialen Höhe im Rotor **angeordnet,** als die zweiten Kühlkanäle. **Somit** fließt der erste Kühlstrom zunächst in der Nähe der Welle, wo er nur wenig Wärme aufnimmt. Nach einem gewissen axialen Laufweg kann der erste Kühlstrom dann "unverbraucht" hohe Kühlwirkung entfalten, wenn er in die zweiten Kühlkanäle umgelenkt wird.

Der Rotor kann mit Permanentmagneten erregt sein. Diese führen nur zu verhältnismäßig geringen Verlusten im Rotor, so dass es genügt, den Rotor in zwei Teilpakete zu unterteilen und nur einen einzigen Kühlluftschlitz in der Mitte des Rotors zu vorzusehen. Dadurch lässt sich ein permanentmagneterregter Rotor leichter herstellen. Andernfalls, wenn der Rotor mit Kurzschlussstäben bestückt ist, können auch mehrere Teilpakete vorgesehen sein, wobei der Kühlstrom dann auch durch mehr als zwei unterschiedliche Ebenen im Rotor geführt werden kann.

Darüber hinaus kann ein (die ersten Kühlkanäle beinhaltendes) Teilpaket gegenüber einem die zweiten Kühlkanäle beinhaltenden Teilpaket in Umfangsrichtung versetzt sein. Dies dient der Reduktion der Drehmomentenwelligkeit des Rotors und kann durch mehrere Scheiben des Abstandshalters ohne weiteres realisiert werden, da der Versatz in der Regel nur sehr gering sein muss. Daher ist die Funktion des Abstandshalters, nämlich die des radialen Umleitens, durch den Versatz ebenfalls nicht beeinträchtigt.

Die vorliegende Erfindung wird nun anhand der beigefügten Zeichnungen näher erläutert, in denen zeigen:
- FIG 1: einen Teilquerschnitt durch einen luftgekühlten Permanentmagnet-Generator;
- FIG 2: einen vergrößerten Ausschnitt aus FIG 1 zur genaueren Darstellung des Niveauwechsels des Kühlstroms im Rotor;
- FIG 3: eine perspektivische Ansicht des Rotors von FIG 1 und
- FIG 4: eine Draufsicht auf einen Ausschnitt des radialen Kühlschlitzes des Rotors von FIG 3.

Die nachfolgend näher geschilderten Ausführungsbeispiele stellen bevorzugte Ausführungsformen der vorliegenden Erfindung dar.

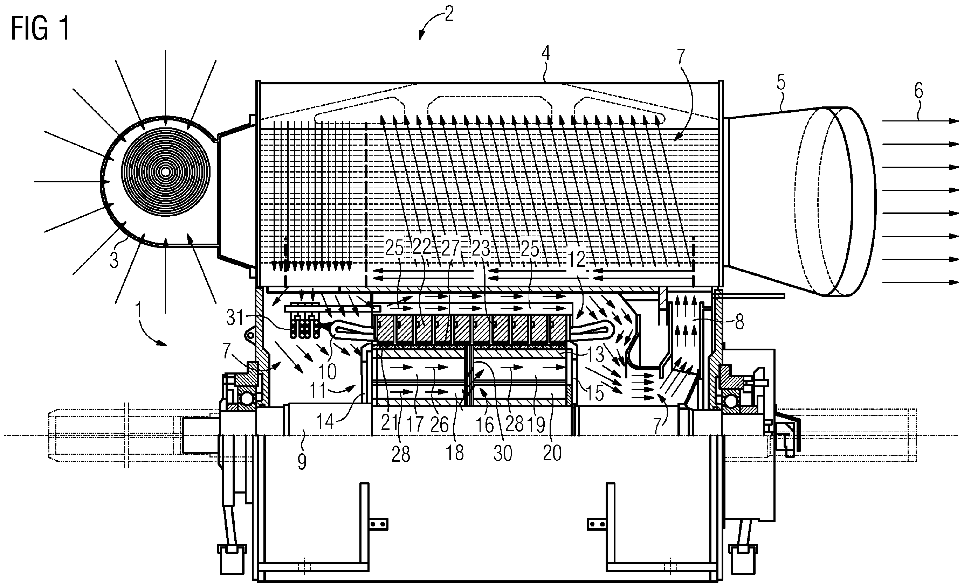

FIG 1 zeigt einen Generator 1 mit einem Kühler 2. Der Kühler 2 besitzt einen Lüfter 3 zum Ansaugen von Kühlluft, die er in einen Wärmetauscher 4 bläst. Die Luft strömt von dort durch eine Auslassstutzen 5 nach außen. Hierdurch ist ein äußerer Kühlkreislauf definiert.

Der Wärmetauscher 4 kühlt durch den äußeren Kühlkreislauf 6 einen inneren, geschlossenen Kühlkreislauf 7. Angetrieben wird der innere Kühlkreislauf 7 durch einen Wellenlüfter 8, der auf die B-Seite der Welle 9 des Generators 1 montiert ist. Der innere Kühlkreislauf durchströmt beginnend von dem Lüfter 8 den Wärmetauscher und dringt auf der A-Seite (Antriebsseite) des Generators in den Wickelkopfraum ein. Dort umströmt er den Wickelkopf 10 sowie die Wicklungsschaltung 31 und durchströmt anschließend den Rotor 11 und den Stator 12, wie nachfolgend näher erläutert werden wird. Schließlich durchströmt das Kühlmittel (insbesondere Luft) den Wickelkopfraum auf der B-Seite (Nichtantriebsseite) des Generators und erreicht wieder den Wellenlüfter 8.

Der Rotor 11 besitzt ein Blechpaket 13, an dessen Stirnseiten Druckringe 14 und 15 angebracht sind. In seiner axialen Richtung ist der Rotor 11 durch einen radialen Kühlschlitz 16 zweigeteilt. Dieser Kühlschlitz 16 wird hier durch einen Abstandshalter mit den Scheiben 29 gebildet.

Der Rotor 11 weist weiterhin axial verlaufende Kühlkanäle auf, deren axiale Zentren auf zwei koaxialen Zylindern liegen. Nachfolgend wird der radiale Abstand der Zentralachse eines Kühlkanals von der Achse der Welle 9 als radiale Höhe des Kühlkanals bezeichnet. Gemäß dem vorliegenden Beispiel besitzt der Rotor 11 somit einen (dritten) Kühlkanal 17 und radial darunter, also in einer geringeren radialen Höhe einen ersten axialen Kühlkanal 18. Auf der rechten Seite des radialen Kühlschlitzes 16, der den Rotor mittig teilt, befindet sich in der gleichen radialen Höhe wie der erste Kühlkanal 17 ein zweiter Kühlkanal 19. Radial darunter befindet sich wieder in der gleichen radialen Höhe wie der zweite Kühlkanal 18 ein vierter Kühlkanal 20. In dem Blechpaket 13 sind in eigens dafür vorgesehenen Taschen am Umfang verteilt Permanentmagnete 21 angeordnet. Diese sind von beiden Stirnseiten her in den Rotor eingeschoben und von beiden Stirnseiten her auch vergossen. Da der Rotor 11 nur einen mittigen radialen Kühlschlitz 16 besitzt, ist das Einfügen der Magnete und das Vergießen entsprechend einfach zu bewerkstelligen.

Der Stator 12 besitzt als Wicklungsträger ein Blechpaket 22, das von zahlreichen radial verlaufenden Kühlschlitzen 23 durchzogen ist. Am Außenmantel des Blechpakets sind axial verlaufende Kühlrippen 24 an das Blechpaket 22 angeformt. Die Kühlrippen 24 ragen sternförmig von dem Stator 12 ab und können an das Blechpaket angeschweißt sein. Alternativ besitzt jedes Einzelblech des Blechpakets 22 radial abstehende Fortsätze, so dass sich bei der Paketierung der Einzelbleche die Kühlrippen 24 ergeben.

Ein Stator-Kühlstrom 25 verläuft somit entlang des Statormantels ausschließlich in axialer Richtung. Durch diesen Strom, der nahezu ohne Wärmeaufnahme fast unmittelbar vom Wärmetauscher 4 gespeist wird, werden die axialen Kühlrippen 24 des Stators effektiv gekühlt. Am B-seitigen Ende wird dieser erste Kühlstrom 25 noch dazu genutzt, den Wickelkopf zu kühlen.

Erfindungsgemäß ist wie in dem in FIG 1 dargestellten Beispiel ein erster Kühlstrom 28 vorgesehen, der A-seitig in die ersten Kühlkanäle 18 durch das Druckschild 14 einströmt. In dem radialen Kühlschlitz 16 des Rotors 11 befindet sich ein Abstandshalter. Im vorliegenden Beispiel sind als Abstandshalter drei Scheiben 29 eingesetzt. Die Scheiben 29 sind unterschiedlich ausgebildet und besitzen Aussparungen 30 in zueinander versetzten Positionen. Dadurch wird der erste Kühlstrom 28 im radialen Kühlschlitz 16 in FIG 1 nach oben in die zweiten Kühlkanäle 19 gedrängt, die sich rechts von dem Kühlschlitz 16 in größerer radialer Höhe befinden als die ersten Kühlkanäle 18. Schließlich verlässt der erste Kühlstrom 28 die zweiten Kühlkanäle 19 durch das B-seitige Druckschild 15. In dem Druckschild 15 sind hierzu Öffnungen vorgesehen, deren Größe so bemessen ist, dass der Widerstand des ersten Kühlstroms 28 nicht zu gering ist und auch der zweite Kühlstrom 26 einen ausreichenden Volumenstrom besitzt. Nach der Öffnung im Druckschild 15 vereint sich der erste Kühlstrom 28 mit einem zweiten und dritten Kühlstrom 26, 25 in dem Stirnseitenraum des Generators 1 vor dem Wellenlüfter 8. Der erste Kühlstrom 28 wird somit im ersten Teil des Rotors (linke Seite in der FIG) durch den kühleren Bereich (wellennaher Bereich) des Rotors geführt. Er nimmt dabei kaum Wärme auf. Auf der rechten Seite des Rotors ist er dann nach oben geführt und dient dort zur effektiven Kühlung des rechten Rotorteils. Die linke Hälfte des Rotorteils wird, wie oben erläutert, primär durch den zweiten Kühlstrom 26 gekühlt.

Der zweite Kühlstrom 26 durch den Rotor wird durch ein Kühlmittel bzw. Kühlluft gespeist, welches/welche im A-seitigen Wickelkopfraum den Wickelkopf 10 und die Wicklungsschaltung 31 bereits gekühlt hat. Dieser zweite Kühlstrom 26 dringt durch die A-seitige Druckscheibe 14 in den dritten Kühlkanal 17 des Rotors 11. An dem radialen Kühlschlitz 16 in der Mitte des Rotors wird der zweite Kühlmittelstrom 26 radial nach außen gelenkt. Er verteilt sich axial im gesamten Luftspalt 27 zwischen Rotor 11 und Stator 12. Von dort wird er, da die Druckscheiben 14 und 15 einen etwas größeren Durchmesser besitzen als das Rotorblechpaket einschließlich der Permanentmagnete 21, radial nach außen durch die Kühlschlitze 23 des Stators gedrängt. An der Außenfläche des Stators verbindet sich der zweite Kühl- bzw. Luftstrom 26 mit dem dritten Kühlstrom 25. Der zweite Kühlstrom 26 sorgt somit für eine Kühlung des in FIG 1 dargestellten linken Rotorteils und des Innenteils des Stators über seiner gesamten axialen Länge. Der zweite Kühlstrom 26 besitzt somit im Wesentlichen Z-förmigen Verlauf. Er fließt zunächst axial, dann radial und schließlich wieder axial. Zusammen mit dem linearen Stator-Kühlstrom kann somit eine ausreichende Entwärmung des Stators 12 erfolgen, auch wenn der Rotor lediglich über einen radialen Kühlschlitz 16 und nicht über eine Vielzahl derartiger radialer Schlitze verfügt.

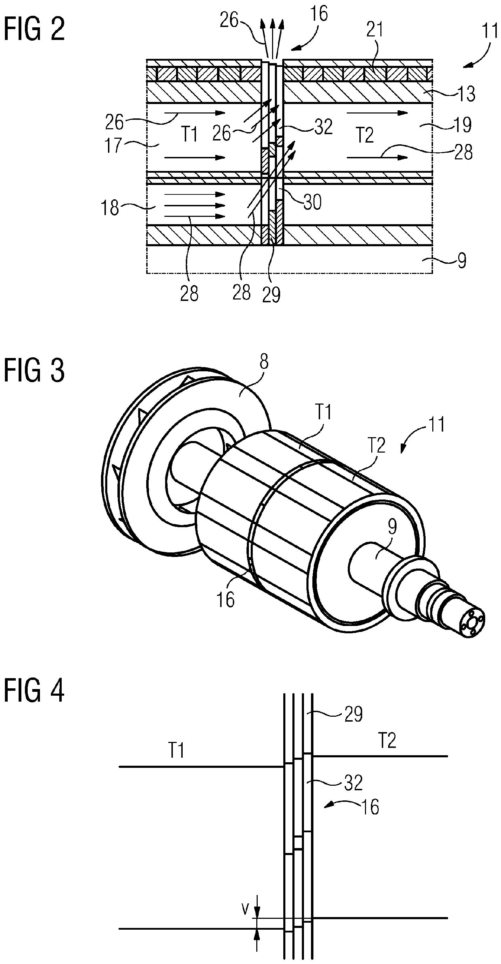

In FIG 2 ist der Ausschnitt des Rotors 11 mit dem Kühlschlitz 16 von FIG 1 vergrößert dargestellt. Der Rotor wird durch den Kühlschlitz 16 axial in zwei Teilpakete T1 und T2 geteilt. Der radiale Kühlschlitz 16 wird durch die Scheiben 29 gebildet, die als Abstandshalter zwischen den beiden Teilpaketen T1 und T2 dienen. Aus der vergrößerten Ansicht von FIG 2 ist ersichtlich, dass die Scheiben 29 Aussparungen bzw. Öffnungen 30 besitzen, so dass ein Kühlstrom die jeweilige Scheibe 29 passieren kann. Im vorliegenden Fall passiert der erste Kühlstrom 28 den Kühlschlitz 16 bzw. die Scheiben 29 durch Öffnungen 30 von einem der ersten Kühlkanäle 18 in einen der zweiten Kühlkanäle 19. Das Zentrum einer jeweiligen Öffnung 30 steigt daher in Kühlstromrichtung von einer Scheibe zur nächsten in radialer Richtung an. Somit steht der erste Kühlkanal 18 mit dem zweiten Kühlkanal 19 in Strömungsverbindung.

Die Scheiben 29 besitzen weitere Aussparungen 32, die es dem zweiten Kühlstrom 26, der durch die dritten Kühlkanäle 17 in den Rotor dringt, ermöglichen, radial nach außen zu fließen. Dabei ist es unter Umständen von Vorteil, wenn die dem zweiten Kühlkanal 19 zugewandte rechte Scheibe 29 den zweiten Kühlkanal 19 gegenüber dem dritten Kühlkanal 17 abdichtet, so dass der zweite Kühlstrom 26, der bei Erreichen des Kühlschlitzes 16 in der Regel bereits deutlich erwärmt ist, nicht in den zweiten Kühlkanal 19 dringt. Vielmehr kann der im ersten Teilpaket T1 geführte erste Kühlstrom 28 nun wegen des radialen Niveauwechsels das zweite Teilpaket T2 im Bereich der Permanentmagnete 21 kühlen, d.h. im äußeren Bereich des Rotors. Prinzipiell sind die Strömungsrichtungen jedes Kühlstroms natürlich auch jeweils in umgekehrter Richtung denkbar.

FIG 3 zeigt den erfindungsgemäßen Rotor ergänzend in einer perspektivischen Ansicht. So befindet sich, wie bereits im Zusammenhang mit FIG 1 erläutert wurde, auf der Welle 9 neben den Teilpaketen T1 und T2 des Rotors 11 auf der B-Seite der Wellenlüfter 8. Die Teilpakete T1 und T2 sind durch den radialen Kühlschlitz 16 voneinander getrennt. Aus ihm dringt der zweite Kühlstrom 26 nach außen. **Die** Teilpakete T1 und T2 **sind** in Umfangsrichtung gegeneinander **versetzt.** In FIG 4 ist dieser Versatz V vergrößert dargestellt. Durch den Versatz V in Umfangsrichtung wird die Drehmomentenwelligkeit des Rotors 11 reduziert. Dennoch gewährleisten die Aussparungen 32 der Scheiben 29 einen hinreichenden radialen Kühlschlitz.

Zusammenfassend lässt sich somit feststellen, dass die Erfindung es ermöglicht, mit zwei oder mehr Teilpaketen eines permanentmagneterregten Läufers die Belüftung sicherzustellen. Außerdem ist es möglich, durch die Nutzung unterschiedlicher Kühlebenen bzw. Niveaus den Rotor über die gesamte Länge mit nahezu unverbrauchter Kühlluft zu versorgen. Darüber hinaus ergeben sich zahlreiche weitere Vorteile. Zum einen ist wegen der leichten Erreichbarkeit der Taschen der Permanentmagnete ein einfacher Verguss möglich. Dadurch ergibt sich eine sichere Fixierung der Magnete und ein hochwertiger Schutz gegen Korrosion. Weiterhin können die Läuferdruckscheiben 29, die die Teilpakete des Rotors voneinander trennen, zur Belüftung des Ständers verwendet werden, da sie Lüfterwirkung besitzen. Gegebenenfalls kann gemäß dem geschilderten Aufbau durch Versatz der Teilpakete das Rastmoment gesenkt werden. Ein zusätzlicher Vorteil ergibt sich dadurch, dass die Blechschnitte der beiden Teilpakete identisch sein können.

## Patentansprüche

1. Elektrische Maschine mit
- einem Rotor (11), der einen einzigen radialen Kühlschlitz (16) besitzt, wobei
- der Rotor (11) axial verlaufende Kühlkanäle aufweist, die in seinen radialen Kühlschlitz (16) münden, wobei
- erste Kühlkanäle (18) der axial verlaufenden Kühlkanäle mit ihrer Zentralachse in einer geringeren radialen Höhe gegenüber der Achse des Rotors (11) verlaufen als zweite Kühlkanäle (19) der axial verlaufenden Kühlkanäle, und
- in dem radialen Kühlschlitz (16) ein Abstandshalter angeordnet ist, mit dem ein erster Kühlstrom (28) von einem der ersten Kühlkanäle (18) in einen der zweiten Kühlkanäle (19) leitbar ist
**dadurch gekennzeichnet, dass**
- der Kühlschlitz (16) den Rotor (11) mittig teilt, und
- ein zweiter Kühlstrom (26) in einem der axial verlaufenden Kühlkanäle einleitbar und durch den Abstandshalter radial nach außen lenkbar ist, wobei sich die dritten Kühlkanäle (17) in der gleichen radialen Höhe befinden, wie die zweiten Kühlkanäle (19).

2. Elektrische Maschine nach Anspruch 1, wobei der Abstandshalter mehrere Scheiben (29) aufweist, die jeweils Durchgangsöffnungen (30) besitzen, und wobei die Durchgangsöffnungen (30) der Scheiben (29) so angeordnet sind, dass sie den ersten Kühlstrom (28) in radialer Richtung umlenken.

3. Elektrische Maschine nach einem der vorhergehenden Ansprüche, wobei der Rotor (11) mit Permanentmagneten (21) erregt ist.

4. Elektrische Maschine nach einem der Ansprüche 1 bis **3,** wobei der Rotor (11) Kurzschlussstäbe aufweist.

5. Elektrische Maschine nach einem der vorhergehenden Ansprüche, wobei ein die ersten Kühlkanäle (18) beinhaltendes Teilpaket (T1) gegenüber einem die zweiten Kühlkanäle (19) beinhaltendes Teilpaket (T2) in Umfangsrichtung versetzt ist.

6. Verfahren zum Kühlen einer elektrischen Maschine mit einem Rotor (11) durch Kühlen des Rotors mit einem ersten Kühlstrom (28), der axial in den Rotor (11) eingeleitet wird, wobei
- der erste Kühlstrom (28) beim Einleiten in den Rotor in Flussrichtung eine Mittellinie aufweist, welche in einer ersten radialen Höhe gegenüber der Achse des Rotors liegt,
- der erste Kühlstrom (28) in der Mitte des Rotors in einem einzigen radialen Kühlschlitz (16) mit seiner Mittellinie auf eine gegenüber der ersten radialen Höhe größere zweite radiale Höhe umgelenkt wird, und
- ein zweiter Kühlstrom (26) in der zweiten radialen Höhe axial in den Rotor (11) eingeleitet und in der Mitte des Rotors radial nach außen geführt wird.

## Claims

1. Electrical machine having
- a rotor (11) which has a single radial cooling slot (16), with
- the rotor (11) having axially running cooling ducts which issue into the radial cooling slot (16) in said rotor, with
- first cooling ducts (18) of the axially running cooling ducts running, by way of their central axis, at a lower radial level relative to the axis of the rotor (11) than second cooling ducts (19) of the axially running cooling ducts, and
- a spacer being arranged in the radial cooling slot (16), it being possible for a first cooling stream (28) to be conducted from one of the first cooling ducts (18) to one of the second cooling ducts (19) by said spacer,
**characterized in that**
- the cooling slot (16) divides the rotor (11) in the center, and
- a second cooling stream (26) can be introduced into one of the axially running cooling ducts and can be directed radially to the outside by the spacer, with the third cooling ducts (17) being located at the same radial level as the second cooling ducts (19).

2. Electrical machine according to Claim 1, with the spacer having a plurality of disks (29) which each have passage openings (30), and with the passage openings (30) in the disks (29) being arranged such that they deflect the first cooling stream (28) in the radial direction.

3. Electrical machine according to either of the preceding claims, with the rotor (11) being excited by permanent magnets (21) .

4. Electrical machine according to one of Claims 1 to 3, with the rotor (11) having short-circuiting bars.

5. Electrical machine according to one of the preceding claims, with a core element (T1) which contains the first cooling ducts (18) being offset in the circumferential direction relative to a core element (T2) which contains the second cooling ducts (19).

6. Method for cooling an electrical machine having a rotor (11) by cooling the rotor with a first cooling stream (28) which is introduced axially into the rotor (11), with
- the first cooling stream (28) having a central line which is situated at a first radial level relative to the axis of the rotor when said cooling stream is introduced into the rotor in the flow direction,
- the first cooling stream (28) in the center of the rotor in a single radial cooling slot (16) being deflected to a second radial level, which is higher than the first radial level, by way of its central line, and
- a second cooling stream (26) being introduced axially into the rotor (11) at the second radial level and being routed radially to the outside in the center of the rotor.

## Revendications

1. Machine électrique, comprenant
- un rotor (11), qui a une fente (16) radiale de refroidissement unique, dans laquelle
- le rotor (11) a des canaux de refroidissement, qui s'étendent axialement et qui débouchent dans sa fente (16) radiale de refroidissement, dans laquelle
- des premiers canaux (18) de refroidissement, parmi les canaux de refroidissement s'étendant axialement, s'étendent, par leur axe central, à un niveau radial, par rapport à l'axe du rotor (11), plus bas que des deuxièmes canaux (19) de refroidissement, parmi les canaux de refroidissement s'étendant axialement et
- dans la fente (16) radiale de refroidissement est disposée une entretoise, par laquelle un premier courant (28) de refroidissement peut être envoyé d'un premier canal (18) de refroidissement à un deuxième canal (19) de refroidissement
**caractérisée en ce que**
- la fente (16) de refroidissement sépare le rotor (11) au milieu et
- un deuxième courant (26) de refroidissement peut être introduit dans l'un des canaux de refroidissement s'étendant axialement et être dévié vers l'extérieur radialement par l'entretoise, les troisièmes canaux (17) de refroidissement se trouvant au même niveau radial que les deuxièmes canaux (19) de refroidissement.

2. Machine électrique suivant la revendication 1, dans laquelle l'entretoise a plusieurs disques (29), qui ont chacun des ouvertures (30) de traversée et dans laquelle les ouvertures (30) de traversée des disques (29) sont telles qu'elles dévient le premier courant (28) de refroidissement dans la direction radiale.

3. Machine électrique suivant l'une des revendications précédentes, dans laquelle le rotor (11) est excité par des aimants (21) permanents.

4. Machine électrique suivant l'une des revendications 1 à 3, dans laquelle le rotor (11) a des barreaux de court-circuit.

5. Machine électrique suivant l'une des revendications précédentes, dans laquelle un sous-paquet (T1), contenant les premiers canaux (18) de refroidissement, est décalé dans la direction périphérique par rapport à un sous-paquet (T2) contenant les deuxièmes canaux (19) de refroidissement.

6. Procédé de refroidissement d'une machine électrique, ayant un rotor (11), par refroidissement du rotor par un premier courant (28) de refroidissement, qui est envoyé axialement dans le rotor (11), dans lequel
- le premier courant (28) de refroidissement a, à l'entrée dans le rotor, dans la direction du flux, une ligne médiane, qui se trouve à un premier niveau radial par rapport à l'axe du rotor,
- on dévie le premier courant (28) de refroidissement, au milieu du rotor dans une fente (16) radiale de refroidissement unique, par sa ligne médiane, à un deuxième niveau radial, plus haut que le premier niveau radial et
- on envoie un deuxième courant (26) de refroidissement axialement dans le rotor (11) au deuxième niveau radial et on l'envoie vers l'extérieur radialement au milieu du rotor.
